# EUROPÄISCHE PATENTSCHRIFT

(11) **EP 1 734 455 B1**
(45) Veröffentlichungstag und Bekanntmachung des Hinweises auf die Patenterteilung: **19.03.2008**
(21) Anmeldenummer: 06115274.0
(22) Anmeldetag: 12.06.2006
(51) Int. Cl.: G06F 13/40

(54) **Adressierung einer Slaveeinheit in einem Master-Slave-System**
Addressing a slave unit in a master slave system
Adressage d'une unité esclave dans un système maître-esclave

(30) Priorität: 15.06.2005 DE 102005027666
(43) Veröffentlichungstag der Anmeldung: 20.12.2006
(73) Patentinhaber: SIEMENS AKTIENGESELLSCHAFT, 80333 München (DE)
(72) Erfinder: Beyer, Stefan, 92224, Amberg (DE); Hauselt, Peter, 92284, Poppenricht (DE); Meier, Matthias, 92284, Poppenricht (DE)

(56) Entgegenhaltungen:
- EP-A- 0 468 194
- WO-A-20/04095300
- GB-A- 2 366 634

## Beschreibung

Die Erfindung bezieht sich auf ein Automatisierungssystem und ein Datenbussystem, welches in einem Automatisierungssystem, beispielsweise in einer SPS-Steuerung, eingesetzt werden kann.

Ein Verfahren zur Adressierung von Busteilnehmern und ein Bussystem sind aus der DE 199 35 192 A1 bekannt. Die Slave-Teilnehmer des dortigen Bussystems weisen eine Logikeinheit, einen Adressleitungseingang und einen Adressleitungsausgang auf. Dabei wird das, in der seriellen Reihenfolge, ausgehend von einem Master an erster Stelle angeordnete Slave, über eine einadrige Adressleitung von dem Master an seinem Adressleitungseingang mit einem Aktivierungssignal angesteuert und damit adressierungsbereit geschaltet. Nach erfolgter Adressierung schaltet die Logikeinheit des ersten Slaves das Adressierungssignal auf seinen Adressleitungsausgang und damit auf den Adressleitungseingang des Folgeslaves weiter, so dass eine serielle Adressierung der Slaves erfolgt.

Die DE 195 45 566 A1 offenbart ebenfalls ein Verfahren zur Übertragung von Daten zwischen Teilnehmern eines Bussystems für Kraftfahrzeuge. Ein Teilnehmer befindet sind in einer Master-Betriebsart, der eine Nachricht an andere Teilnehmer aussendet, welche sich in einer Slave-Betriebsart befinden. Um den Programmieraufwand hinsichtlich der Adressierung in einem Bussystem zu reduzieren, enthält die vom Master ausgesendete Nachricht einen Erkennungsteil, der von einem Slave-Teilnehmer zu einem anderen Slave-Teilnehmer weitergegeben wird, wobei jeder Slave-Teilnehmer den Erkennungsteil der Nachricht verändert und wobei die veränderte Nachricht an den Master weitergegeben wird. Der Slave-Teilnehmer, der eine vorbestimmte Information des Erkennungsteils erkennt, wertet einen Befehlsteil aus.

Aus der EP 1 503 262 A2 ist ein Verfahren zur dynamischen Vergabe von Adressen an Slave-Einheiten eines Master-Slave-Bussystems bekannt. Der Anfang einer Busleitung wird mit einer Master-Einheit verbunden und durch die Slave-Einheiten fortlaufend durchgeschleift. Die Slave-Einheiten unterbrechen in Abhängigkeit von einem Adressenvergabesignal die Busleitung intern und nehmen einen Schieberegister-Betriebszustand ein. Währenddessen werden eingehende Adressen an die jeweils nachfolgende Einheit durchgeschoben. Die Mastereinheit überträgt sequentiell an die mit ihr verbundene Slave-Einheit die zu vergebenden Adressen und in Abhängigkeit von einem Adressenübernahmesignal übernehmen die Slave-Einheiten jeweils ihre zu vergebenden Adressen als aktuelle Adressen, schließen die Busleitung intern kurz und nehmen einen Bus-Betriebszustand ein.

Aus der veröffentlichten internationalen Anmeldung WO 2004/095300 ist ein Verfahren zum Adressieren von über ein Bussystem miteinander verbundenen Modulen bekannt. In diesem Verfahren wird der Adresswert von Modul zu Modul weitergegeben und bei jeder Weitergabe in einer jedem Modul zugeordneten arithmetischen oder logischen Recheneinheit verändert. Jede der Recheneinheiten besitzt einen Extremwert-Ausgang über das dieser Recheneinheit zugeordnete Modul adressierbar ist.

Der Erfindung liegt die Aufgabe zugrunde, ein Automatisierungssystem und ein Datenbussystem insbesondere für einen Einsatz in einem Automatisierungssystem weiter zu entwickeln.

Diese Aufgabe wird durch das Datenbussystem mit den Merkmalen des Anspruchs 1 und durch das Automatisierungssystem mit den Merkmalen des Anspruchs 11 gelöst. Vorteilhafte Weiterbildungen und Varianten sind Gegenstand von rückbezogenen Unteransprüchen.

Demzufolge ist ein Datenbussystem mit einer Mastereinheit, einer ersten Slaveeinheit und zumindest einer weiteren Sla-veeinheit vorgesehen. Ein derartiges Netz weist eine linienförmige Struktur auf. Da ein Kanalzugriff für sendewillige Slaveeinheiten in geordneter, vorausschaubarer Form erfolgt, kann von einer deterministischen Kanalzugriffsmethode gesprochen werden. In diesem Falle einer zentralisierten Steuerung erfolgt die Vergabe von Busbelegungsrechten durch die Master-einheit.

Zur Slaveauswahl weist die Mastereinheit einen Code-Ausgang zur Ausgabe eines eineindeutigen Codes auf. Ein eineindeutiger Code ist vorzugsweise ein Graycode. Alternativ kann als eineindeutiger Code auch bitweise herauf- oder herabgezählt werden. Ein derartiger eineindeutiger Code kann zwei oder mehr Bis aufweisen. Der Graycode bewirkt dabei eine gegenüber anderen Bitwertabfolgen reduzierte Störanfälligkeit. Im Folgenden wird daher der bevorzugte Graycode beschrieben.

Ein Graycode ist beispielsweise für ein Signal aus zwei Bits die Wertefolge:
00 10 11 01.

Die erste Slaveeinheit weist einen Slaveauswahl-Eingang auf, der mit dem Code-Ausgang der Mastereinheit verbunden ist. Der Slaveauswahl-Eingang dient zur Auswahl dieser ersten Slave-einheit in Abhängigkeit von dem eineindeutigen Code. Vorzugsweise stimmt eine Anzahl von Anschlüssen des Slaveauswahl-Eingangs der ersten Slaveeinheit mit einer Anzahl von Anschlüssen des Code-Ausgangs der Mastereinheit überein.

Die erste Slaveeinheit weist zudem einen Slaveauswahl-Ausgang auf, der mit der zumindest einer weiteren Slaveeinheit verbunden ist. Hierzu weist die weitere Slaveeinheit vorzugsweise ebenfalls einen Slaveauswahl-Eingang auf, der sowohl mit der ersten Slaveeinheit als auch mit der Mastereinheit verbunden ist.

Die erste Slaveeinheit weist einen Inverter auf, der ein Bit des am Slaveauswahl-Eingang anliegenden eineindeutigen Codes invertiert und auf den Slaveauswahl-Ausgang der ersten Slave-einheit ausgibt. Ein derartiger Inverter kann in Ausgestaltungsvarianten der Erfindung entweder als Hardware, beispielsweise in Form eines CMOS-Inverters, ausgebildet sein, oder durch Software einer Recheneinheit, insbesondere eines Mikrocontrollers, realisiert sein.

Eine bevorzugte Weiterbildung der Erfindung sieht vor, dass jede Slaveeinheit einen Inverter aufweist, der mit dem jeweiligen Slaveauswahl-Eingang und dem jeweiligen Slaveauswahl-Ausgang verbunden ist.

Bevorzugt ist in einer Weiterbildung der Erfindung vorgesehen, dass ein Wert des eineindeutigen Codes, insbesondere des Graycodes einer Auswahl einer Slaveeinheit zum Senden und/oder Empfangen von Daten zugeordnet ist. Vorzugsweise ist dieser Wert fest, so dass eine hinzuzufügende Slaveeinheit nicht auf einen abweichenden Wert konfiguriert werden muss.

In einer vorteilhaften Ausgestaltung der Erfindung weisen die Slaveeinheiten zur Datenkommunikation eine identische Software und/oder eine identische Hardware auf. Dies ermöglicht ein so genanntes "plug and play", so dass eine Slaveeinheit durch Einstecken hinzugefügt werden kann, ohne dass eine manuelle Adressvergabe erforderlich ist. Dabei ist es ausreichend, dass sich die Identität der Hard- und Software auf den Datenbussystemteil bezieht.

Eine bevorzugte Ausgestaltung der Erfindung sieht vor, dass zur Datenübertragung die Mastereinheit parallel mit jeder Slaveeinheit über eine serielle Schnittstelle vernetzt ist, wobei die serielle Schnittstelle vorzugsweise dreiadrig ist. Dies ermöglicht eine gleichzeitige Datenübertragung in beide Richtungen, also von der Mastereinheit zur ausgewählten Slaveeinheit und von der ausgewählten Slaveeinheit hin zur Mastereinheit.

Um eine Synchronisation der Datenübertragung zu vereinfachen und möglichst einfache und daher nicht genaue Taktgeber zu verwenden, ist in einer vorteilhaften Ausgestaltung der Erfindung vorgesehen, dass jede Slaveeinheit zur Generierung eines Taktsignals ausgebildet ist. Die Mastereinheit weist dabei Mittel zur Aufsynchronisation auf das Taktsignal der ausgewählten Slaveeinheit auf. Vorzugsweise ist dabei jede Slaveeinheit zur Generierung des Taktsignals in Abhängigkeit von einem an dem Slaveauswahl-Eingang anliegenden Signal ausgebildet.

Vorteilhafterweise ist jede Slaveeinheit ausgebildet, im Fehlerfall die Ausgänge der seriellen Schnittstelle abzuschalten. Dies ermöglicht die Vermeidung von Kollisionen auf der seriellen Schnittstelle zur Datenübertragung zwischen einer funktionsfähigen, ausgewählten Slaveeinheit und einer fehlerhaft arbeitenden Slaveeinheit, die eine Datenkommunikation zur Mastereinheit erheblich stören oder ganz unterbinden kann.

In einer vorteilhaften Ausgestaltung der Erfindung weist die Mastereinheit ein Gateway zum Senden und/oder Empfangen von Daten eines anderen Busses auf. Dies ermöglicht eine Fernsteuerung der Funktionen der Slaveeinheiten über einen mit der Mastereinheit verbundenen Zentralrechner, der beispielsweise eine gesamte Fertigungsanlage steuert. Alternativ oder in Kombination mit Schnittstellen oder Busverbindungen zu anderen Einheit weist in einer vorteilhaften Ausgestaltung der Erfindung die Mastereinheit eine Eingabeeinheit zur manuellen Auswahl einer Slaveeinheit auf. Dies kann beispielsweise eine Tastatur in Verbindung mit einer Anzeigeeinheit in Form eines Displays sein.

Ein weiterer Aspekt der Erfindung ist die Verwendung eines zuvor beschriebenen Datenbussystems zur Ansteuerung von Sensor-Aktuator-Steuerungs-Einheiten eines Automatisierungssystems, insbesondere einer SPS-Steuerung.

Nachfolgend werden Ausführungsbeispiele der Erfindung anhand von Zeichnungen näher erläutert. Darin zeigen:
- FIG 1: ein schematisches Blockschaltbild eines Datenbussystems,
- FIG 2: eine schematische Darstellung eines zeitlichen Ausschnittes einer Busaktivität, und
- FIG 3: eine Auswahl von Slaveeinheiten mittels eines Graycodes innerhalb eines Zeitausschnittes.

Einander entsprechende Funktionselemente sind in allen Figuren mit den gleichen Bezugszeichen versehen.

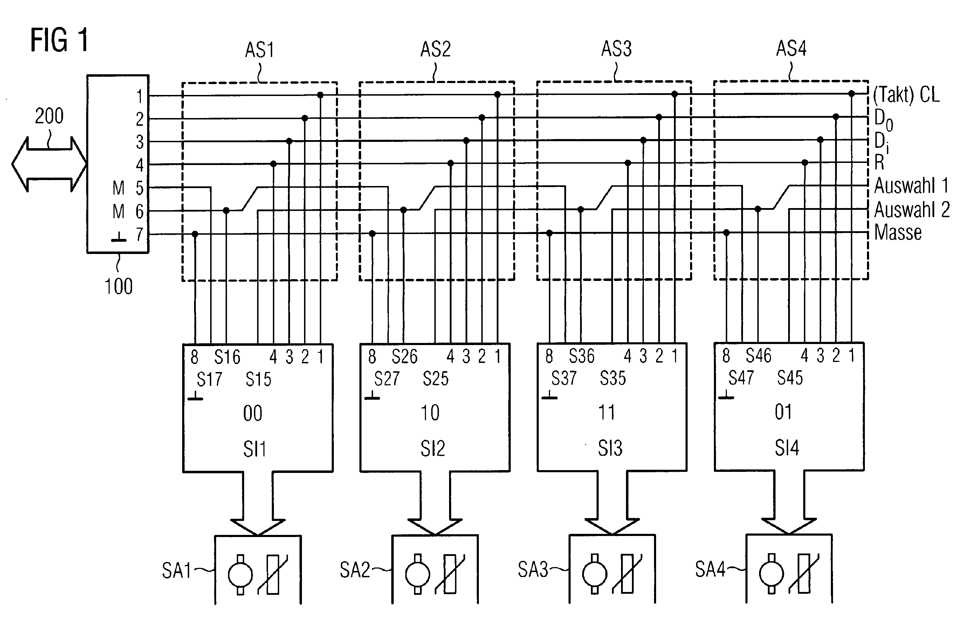

In FIG 1 ist ein schematisches Blockschaltbild eines erfindungsgemäßen Datenbussystems dargestellt. Als Master 100 dient eine Dateneinspeise-Baugruppe. In dem Ausführungsbeispiel der FIG 1 fungiert der Master 100 als so genanntes Gateway, dass eine Kommunikation sowohl innerhalb des Datenbussystems als auch zu weiteren Funktionsgruppen, wie beispielsweise einem Zentralrechner, über ein anderes Bussystem 200, wie einen CAN, IQ-Sence oder PROFIbus ermöglicht. Zusätzlich oder alternativ kann der Master 100 auch für eine manuelle Eingabe von Daten vorgesehen sein, die über das Datenbussystem übertragen werden.

Zur Übertragung von Daten ist der Master 100 mit vier Slave-einheiten S11, S12, S13 und S14 verbunden. Diese Slaveeinheiten Sl1, S12, S13 und S14 sind bevorzugt Module eines Kompaktabzweigsystems, wobei ein Modul zusätzlich zu der Busfunktionalität eine Komponente SA1, SA2, SA3 oder SA4 mit Hardware und Software zur Steuerung von Aktuatoren, zum Messen von Sensoren und Sicherheitsfunktionen enthält. Hierzu kann die Komponente SA1 bis SA4 beispielsweise eine Leistungselektronik, wie zum Beispiel Leistungshalbleiter, enthalten. Sie ist ein Steuer- und Schutzgerät für vorzugsweise vier Motoren und bietet Schutz gegen Überlast oder Übertemperatur. Die Slaveeinheit Sl1, S12, S13, S14 erkennt dabei die angeschlossenen Aktuatoren oder Sensoren selbstständig, ordnet ihnen eine Identifikation zu und konfiguriert die Steuerungssoftware.

Die Slaveeinheiten Sl1, Sl2, Sl3 und Sl4 sind vom Master 100 eindeutig ihrer Position im Bus zugeordnet. Die Komponenten SA1, SA2, SA3 oder SA4 können zusätzlich unterschiedliche Funktionen erfüllen, wie Motorstarter "direkt", "wende", "sanft" u.s.w.. Die Zuordnung der Slaveeinheiten Sl1, S12, S13 und S14 erfordert dabei keine manuelle Adressvergabe, sondern wird durch ein Protokoll des Busses verwaltet. Der Master 100 sendet beispielsweise Steuerdaten für einen an einer Komponente SA1, SA2, SA3 oder SA4 angeschlossenen Elektromotor.

Das Datenbussystem ist für maximal vier Slaveeinheiten S11 bis S14 ausgelegt. Die Vernetzung innerhalb des Datenbussystems erfolgt parallel, mit Ausnahme der beiden Leitungen an den Ausgängen M5 und M6 des Masters 100. Die Leitung des Ausgangs M5 gelangt an den Eingang S17 der ersten Slaveeinheit S11. Die Slaveeinheit S11 invertiert das am Eingang S17 anliegende Signal und gibt ein invertiertes Signal am Ausgang S15 aus. Dieses invertierte Signal gelangt an einen Eingang S26 der zweiten Slaveeinheit S12 und an einen Eingang S37 der dritten Slaveeinheit S13. Die Eingänge S17, S27, S37 und S47 invertieren dabei das anliegende Signal und geben das invertierte Signal an die Ausgänge S15, S25, S35 und S45 ab.

Liegen beide Ausgänge M5 und M6 des Masters 100 auf LOW-Potential, erhalten die Slaveeinheiten S11 bis S14 an ihren Eingängen durch diese Verdrahtung jeweils einen Wert eines Graycodes. Gemäß dem dargestellten Fall erhält die Slaveeinheit S11 den Wert "00", die Slaveeinheit S12 den Wert "10", die Slaveeinheit S13 den Wert "11" und Slaveeinheit S14 den Wert "01". Dem Wert "00" ist in FIG 1 eine Auswahl zur Kommunikation mit dem Master 100 zugeordnet, so dass im dargestellten Fall die Slaveeinheit S11 über die Eingänge "1" bis "4" Senden und Empfangen kann. Die weiteren Slaveeinheiten S12 bis S13 schalten die Ein- und Ausgänge "1" bis "4" ab.

Zur Auswahl der Slaveeinheit S12 legt der Master 100 an den Ausgang M5 ein HIGH-Potential und an den Ausgang M6 ein LOW-Potential an. Durch die Invertierung in der Slaveeinheit Sl1 liegt an den Eingängen S26, S27 der zweiten Slaveeinheit S12 jeweils ein LOW-Potential an, was dem Graycode-Wert "00" entspricht. Zu diesem Zeitpunkt ist die zweite Slaveeinheit S12 zum Senden und Empfangen ausgewählt. Dieses Verfahren hat zur Folge, dass durch den Graycode die Module Sl1, S12, S13, Sl4 sequenziell eindeutig angesprochen werden können. Die Wahrscheinlichkeit einer Datenkollision unterschiedlicher Slave-einheiten S11, S12, S13 oder S14 kann durch die Verwendung des Graycodes wesentlich reduziert werden.

Durch das Anlegen der aufeinander folgenden Werte des Graycodes kann der Master 100 auf diese Weise nacheinander die einzelnen Slaveeinheiten S11 bis S14 zur Kommunikation auswählen. Der Graycode hat dabei die besondere Eigenschaft, dass sich benachbarte Binärkombinationen nur in einer Stelle unterscheiden. Solche Codes werden einschrittig oder auch zyklisch genannt. Sie werden benutzt, um falsche Zwischenkombinationen vereinfacht zu ermitteln. Zudem ist durch die Verwendung des Graycodes keine explizite Adressvergabe über den Datenbus erforderlich.

Zur Kommunikation sendet die ausgewählte Slaveeinheit Sl1, S12, S13 oder S14 ein Taktsignal Cl aus, auf das sich der Master 100 synchronisiert. Über eine Datenleitung D_{O} sendet der Master 100 Daten an die ausgewählte Slaveeinheit Sl1, S12, S13 oder S14 und über eine andere Datenleitung D_{I} sendet die ausgewählte Slaveeinheit Sl1, S12, S13 oder S14 Daten an den Master 100. Der Datenaustausch findet ausschließlich zwischen dem Master 100, der auch als Router bezeichnet werden kann, und den angeschlossenen Slaveeinheiten S11, S12, S13 oder S14 statt. Hierzu wird ein serieller Datentransfer über die drei Adern Cl, D_{O} und D_{I} genutzt. Über eine Reset-Leitung R ist ein Reset der ausgewählten Slaveeinheit Sl1, S12, S13 oder Sl4 möglich.

Um ein einfaches Anschließen der Slaveeinheiten Sl1, Sl2, Sl3 oder S14 an das Datenbussystem zu ermöglichen, ist eine mechanische Standard-Steckverbindung AS1, AS2, AS3 und AS4 vorgesehen, die eine einfache Montage der Slaveeinheiten Sl1, Sl2, Sl3 oder Sl4 ermöglicht. Die Slaveeinheiten Sl1, Sl2, Sl3 und Sl4 weisen eine identische Hardware und eine identische Konfiguration auf, so dass diese an einen belieben Stecker AS1, AS2, AS3 oder AS4 gesteckt werden können. Diese Stecker können Teil einer bestückten Rückwandbusplatine sein, die eine Anordnung des gesamten Datenbussystems in einem Gehäuse ermöglicht. Ist eine Slaveeinheit Sl1, Sl2, Sl3 oder Sl4 defekt oder im Steckplatz AS1, AS2, AS3 oder AS4 nicht vorhanden, erkennt dies der Master 100 und kann durch Änderung des Graycodewertes eine andere Slaveeinheit Sl1, Sl2, Sl3 oder Sl4 auswählen.

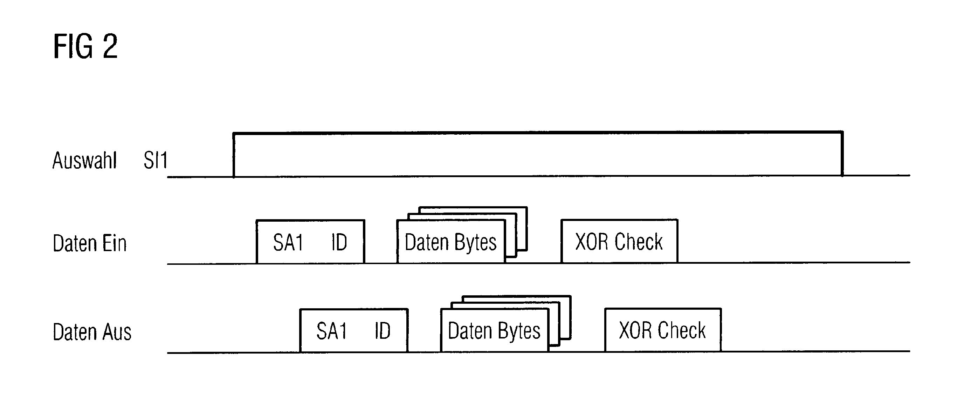

In FIG 2 ist ein zeitlicher Ausschnitt einer Busaktivität schematisch dargestellt. Um den technischen Aufwand in den Slaveeinheiten Sl1, S12, Sl3, S14 so klein wie möglich zu halten, generieren die Slaveeinheiten Sl1, Sl2, Sl3, Sl4 nach der Selektion durch den Master 100 ein Taktsignal, dass auch als Clock-Signal bezeichnet werden kann, und senden ein definiertes Telegram aus. Im gleichen Zug empfängt die ausgewählte Slaveeinheit Sl1, Sl2, Sl3 oder Sl4 ein auf das Clock-Signal getaktetes Telegram vom Master 100.

In FIG 2 ist ein Telegram für die ausgewählte Slaveeinheit Sl1 schematisch dargestellt. Das Telegramm besteht aus drei Teilen. Im ersten Byte wird eine Identifikation SA1ID einer Komponente SA1 übermittelt, welche dem Master 100 eindeutige Informationen über die Funktionen eines angeschlossenen Gerätes liefert. Dies können beispielsweise Informationen über angeschlossene Sensoren oder Aktuatoren sein, die gemessen oder angesteuert werden können. Der zweite Teil (Daten Bytes) ist reserviert zur Datenübertragung zwischen dem Master 100 und der ausgewählten Slaveeinheit Sl1. Die Größe des zweiten Teils ist dabei abhängig von der Identifikation SA1ID der Komponente SA1, da unterschiedliche Funktionen verschieden viele Daten benötigen. Im Normalfall reicht ein Byte aus, um eine Standardfunktion, wie die eines Motorstarters, zu steuern. Der dritte Teil dient der Datensicherung XOR Check. Es wird eine Exklusive-Oder-Prüfsumme über die ersten beiden Teile gebildet.

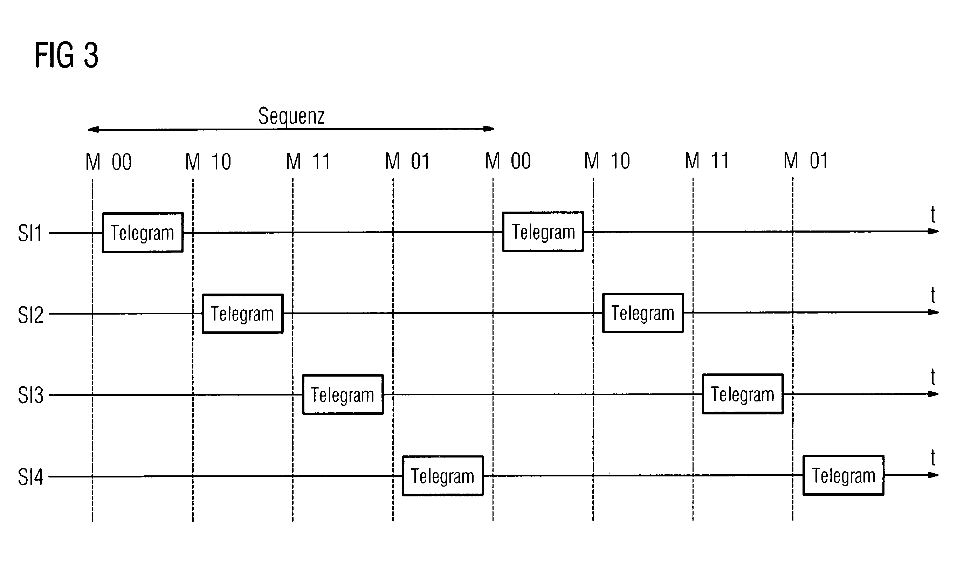

Anhand der FIG 3 wird ein Verbindungsaufbau zwischen dem Master 100 und den Slaveeinheiten Sl1, S12, S13, S14 schematisch dargestellt. Im oberen Bereich sind die Graycode-Werte M00, M10 u.s.w. aufgetragen, die an den Ausgängen M5 und M6 des Masters 100 ausgegeben werden. Nach einer vollen Sequenz wiederholen sich diese Werte. Die jeweilige Slaveeinheit Sl1, S12, S13 bzw. S14 wird durch das Signal M00, M10 u.s.w. initialisiert. Die jeweils ausgewählte Slaveeinheit S11 bis S14 startet mit dem Clock-Signal die Übertragung und kommuniziert ein Telegramm nach einer Initialisierung durch den Master 100. Nach der erfolgreichen Telegrammübertragung rotiert der Master 100 das Graycode-Signal, um sequenziell alle Slaveeinheiten S11 bis S14 nacheinander zu pollen. Fällt die Kommunikation aus, so wird dieser Fehler von den Slaveeinheiten Sl1, S12, S13, S14 erkannt und gemeldet. Bei der fehlerbehafteten Slaveeinheit Sl1, S12, S13 bzw. S14 werden die Ausgänge sicher abgeschaltet.

Für eine Realisierung dieses Datenbussystems der Figuren 1 bis 3 werden nur drei Leitungen für den Datentransfer und zwei Leitungen für die Auswahl der kommunizierenden Slaveeinheit Sl1, S12, S13, S14 benötigt. Die Aufgaben werden von einem (nicht dargestellten) Mikrocontroller verarbeitet, was die Entwicklung von aufwändigen Hardwarelösungen und ASICs überflüssig macht. Da die Software nur sehr wenige Ressourcen (MIPS) benötigt, können die Aufgaben auch optional von einem bereits vorhandenen Prozessor mit übernommen werden.

Die beschriebene Realisierung ermöglicht eine Anlauferkennung. Dies bedeutet, dass bei einem Neustart der Master 100 erkennt, welche Arten von Komponenten SA1 bis SA4 angeschlossen sind. Die Adresse entspricht dabei der Position im Aufbau, also einem der Steckplätze AS1 bis AS4. Somit bietet die kostengünstige Lösung gemäß den Figuren 1 bis 3 die Möglichkeit, die Bedienung sowohl zentral als auch "vor Ort" vorzunehmen, wobei Installation und Inbetriebnahme einfach gehalten sind.

## Patentansprüche

1. Datenbussystem mit einer Mastereinheit (100) und mit einer ersten Slaveeinheit (S11) sowie mit zumindest einer weiteren Slaveeinheit (S12, S13, S14),
- wobei zur Slaveauswahl die Mastereinheit (100) einen Code-Ausgang (M5, M6) zur Ausgabe eines eineindeutigen Codes aufweist,
- wobei die erste Slaveeinheit (S11) einen Slaveauswahl-Eingang (S17, S16) aufweist, der mit dem Code-Ausgang (M5, M6) der Mastereineinheit (100) verbunden ist,
- wobei die erste Slaveeinheit (S11) einen Slaveauswahl-Ausgang (S15) aufweist, der mit der zumindest einen weiteren Slaveeinheit (S12, S13) verbunden ist, und
**dadurch gekennzeichnet, dass** die erste Slaveeinheit (S11) einen Inverter aufweist, der ein Bit des am Slaveauswahl-Eingang (S17) anliegenden, eineindeutigen Codes invertiert und auf den Slaveauswahl-Ausgang (S15) der ersten Slaveeinheit (S11) ausgibt.

2. Datenbussystem nach Anspruch 1,
**dadurch gekennzeichnet, dass** der eineindeutige Code ein Graycode ist.

3. Datenbussystem nach einem der Ansprüche 1 oder 2,
**dadurch gekennzeichnet, dass** ein Wert (00, 10, 11, 01) des eineindeutigen Codes, insbesondere des Graycodes einer Auswahl einer Slaveeinheit (S11, S12, S13, S14) zum Senden und/oder Empfangen von Daten zugeordnet ist.

4. Datenbussystem nach Anspruch 1 bis 3,
**dadurch gekennzeichnet, dass** die Slaveeinheiten (S11, S12, S13, S14) zur Datenkommunikation eine identische Software und/oder eine identische Hardware aufweisen.

5. Datenbussystem nach einem der Ansprüche 1 bis 4,
**dadurch gekennzeichnet, dass** zur Datenübertragung die Mastereinheit (100) parallel mit jeder Slaveeinheit (S11, S12, S13, S14) über eine serielle Schnittstelle (Dₒ, D_{I}, Cl) vernetzt ist, wobei die serielle Schnittstelle (D_{O}, D_{I}, Cl) vorzugsweise dreiadrig ist.

6. Datenbussystem nach einem der Ansprüche 1 bis 5,
**dadurch gekennzeichnet, dass** jede Slaveeinheit (S11, S12, S13, S14) zur Generierung eines Taktsignals (C1) ausgebildet ist.

7. Datenbussystem nach Anspruch 6,
**dadurch gekennzeichnet, dass** jede Slaveeinheit (S11, S12, S13, S14) zur Generierung des Taktsignals (C1) in Abhängigkeit von einem an dem Slaveauswahl-Eingang (S17, S16, S27, S26, S37, S36, S47, S46) anliegenden Signal ausgebildet ist.

8. Datenbussystem nach einem der Ansprüche 1 bis 7,
**dadurch gekennzeichnet, dass** die Slaveeinheit (S11, S12, S13, S14) ausgebildet ist, im Fehlerfall die Ausgänge der seriellen Schnittstelle (Dₒ, D_{I}, Cl) abzuschalten.

9. Datenbussystem nach einem der Ansprüche 1 bis 8,
**dadurch gekennzeichnet, dass** die Mastereinheit (100) ein Gateway zum Senden und/oder Empfangen von Daten eines anderen Busses (200) aufweist.

10. Datenbussystem nach einem der Ansprüche 1 bis 9,
**dadurch gekennzeichnet, dass** die Mastereinheit (100) eine Eingabeeinheit zur manuellen Auswahl einer Slaveeinheit (S11, S12, S13, S14) aufweist.

11. Automatisierungssystem, insbesondere eine SPS-Steuerung, mit einem Datenbussystem nach einem der Ansprüche 1 bis 10.

## Claims

1. Data bus system having a master unit (100) and having a first slave unit (S11) and also having at least one further slave unit (S12, S13, S14),
- where, for the purposes of slave selection, the master unit (100) has a code output (M5, M6) for outputting a unique code,
- where the first slave unit (S11) has a slave selection input (S17, S16) which is connected to the code output (M5, M6) of the master unit (100),
- where the first slave unit (S11) has a slave selection output (S15) which is connected to the at least one further slave unit (S12, S13), and
**characterized in that** the first slave unit (S11) has an inverter which inverts a bit of the unique code applied to the slave selection input (S17) and outputs it to the slave selection output (S15) of the first slave unit (S11).

2. Data bus system according to Claim 1,
**characterized in that** the unique code is a Gray code.

3. Data bus system according to either of Claims 1 and 2,
**characterized in that** a value (00, 10, 11, 01) of the unique code, particularly of the Gray code, is associated with a selection for a slave unit (S11, S12, S13, S14) for sending and/or receiving data.

4. Data bus system according to Claims 1 to 3,
**characterized in that** the slave units (S11, S12, S13, S14) have identical software and/or identical hardware for data communication.

5. Data bus system according to one of Claims 1 to 4,
**characterized in that** for data transmission the master unit (100) is networked to each slave unit (S11, S12, S13, S14) in parallel via a serial interface (Dₒ, D_{I}, Cl), the serial interface (Dₒ, D_{I}, Cl) preferably containing three wires.

6. Data bus system according to one of Claims 1 to 5,
**characterized in that** each slave unit (S11, S12, S13, S14) is designed to generate a clock signal (Cl).

7. Data bus system according to Claim 6,
**characterized in that** each slave unit (S11, S12, S13, S14) is designed to generate the clock signal (Cl) on the basis of a signal applied to the slave selection input (S17, S16, S27, S26, S37, S36, S47, S46).

8. Data bus system according to one of Claims 1 to 7,
**characterized in that** the slave unit (S11, S12, S13, S14) is designed to turn off the outputs of the serial interface (D_{O}, D_{I}, Cl) in the event of an error.

9. Data bus system according to one of Claims 1 to 8,
**characterized in that** the master unit (100) has a gateway for sending and/or receiving data from another bus (200).

10. Data bus system according to one of Claims 1 to 9,
**characterized in that** the master unit (100) has an input unit for manually selecting a slave unit (S11, S12, S13, S14).

11. Automation system, particularly a PLC controller, having a data bus system according to one of Claims 1 to 10.

## Revendications

1. Système de bus de données avec une unité maîtresse (100) et avec une première unité esclave (S11) ainsi qu'avec au moins une autre unité esclave (S12, S13, S14), dans lequel
- pour la sélection d'esclave, l'unité maîtresse (100) comporte une sortie de code (M5, M6) pour la sortie d'un code univoque,
- la première unité esclave (S11) comporte une entrée de sélection d'esclave (S17, S16) qui est reliée à la sortie de code (M5, M6) de l'unité maîtresse (100),
- et la première unité esclave (S11) comporte une sortie de sélection d'esclave (S15) qui est reliée à la - au moins une - autre unité esclave (S12, S13), et
**caractérisé par le fait que** la première unité esclave (S11) comporte un inverseur qui inverse un bit du code univoque présent à l'entrée de sélection d'esclave (S17) et qui l'envoie à la sortie de sélection d'esclave (S15) de la première unité esclave (S11).

2. Système de bus de données selon la revendication 1,
**caractérisé par le fait que** le code univoque est un code Gray.

3. Système de bus de données selon l'une des revendications 1 ou 2,
**caractérisé par le fait qu'**une valeur (00, 10, 11, 01) du code univoque, notamment du code Gray, est associée à une sélection d'une unité esclave (S11, S12, S13, S14) pour l'émission et/ou la réception de données.

4. Système de bus de données selon l'une des revendications 1 à 3,
**caractérisé par le fait que** les unités esclaves (S11, S12, S13, S14) comportent un logiciel identique et/ou un matériel identique pour la communication de données.

5. Système de bus de données selon l'une des revendications 1 à 4,
**caractérisé par le fait que**, pour la transmission de données, l'unité maîtresse (100) est mise en réseau en parallèle avec chaque unité esclave (S11, S12, S13, S14) par l'intermédiaire d'une interface sérielle (Dₒ, D_{I}, Cl), l'interface sérielle (Dₒ, D_{I}, Cl) étant de préférence à trois fils.

6. Système de bus de données selon l'une des revendications 1 à 5,
**caractérisé par le fait que** chaque unité esclave (S11, S12, S13, S14) est conçue pour la génération d'un signal d'horloge (Cl).

7. Système de bus de données selon la revendication 6,
**caractérisé par le fait que** chaque unité esclave (S11, S12, S13, S14) est conçue pour la génération du signal d'horloge (Cl) en fonction d'un signal présent à l'entrée de sélection d'esclave (S17, S16, S27, S26, S37, S36, S47, S46).

8. Système de bus de données selon l'une des revendications 1 à 7,
**caractérisé par le fait que** l'unité esclave (S11, S12, S13, S14) est conçue pour couper en cas d'erreur les sorties de l'interface sérielle (Dₒ, D_{I}, Cl).

9. Système de bus de données selon l'une des revendications 1 à 8,
**caractérisé par le fait que** l'unité maîtresse (100) comporte une passerelle pour l'émission et/ou la réception de données d'un autre bus (200).

10. Système de bus de données selon l'une des revendications 1 à 9,
**caractérisé par le fait que** l'unité maîtresse (100) comporte une unité d'entrée pour la sélection manuelle d'une unité esclave (S11, S12, S13, S14).

11. Système d'automatisation, notamment commande par programme enregistré, avec un système de bus de données selon l'une des revendications 1 à 10.
